# EUROPEAN PATENT SPECIFICATION

(11) **EP 2 854 306 B1**
(45) Date of publication and mention of the grant of the patent: **01.01.2020**
(21) Application number: 13290229.7
(22) Date of filing: 25.09.2013
(51) Int. Cl.: H04B 10/079, H04B 10/60

(54) **Optical receiver and method of operating an optical receiver**
Optischer Empfänger und Verfahren zum Betrieb eines optischen Empfängers
Récepteur optique et procédé de fonctionnement d'un récepteur optique

(43) Date of publication of application: 01.04.2015
(73) Proprietor: Alcatel Lucent, 91620 Nozay (FR)
(72) Inventor: Ulrich, Gebhard, 70435 Stuttgart (DE); Lars, Dembeck, 70435 Stuttgart (DE); Jens, Milbrandt, 70435 Stuttgart (DE)
(74) Representative: DREISS Patentanwälte PartG mbB

(56) References cited:
- EP-A2- 1 049 272
- US-A1- 2003 058 497
- US-A1- 2009 010 643
- US-B1- 7 522 846

## Description

### Field of the invention

The invention relates to an optical receiver configured to receive an optical signal from at least one optical link.

The invention further relates to a method of operating an optical receiver.

The invention also relates to an optical network comprising a network element and a method of operating such optical network.

### Background

Within conventional optical networks, physical parameters of optical links are calculated at provisioning time with a simulation tool, and the so obtained physical parameters may be used for routing processes and assessing a link budget throughout the lifetime of the optical network. Disadvantageously, these conventionally obtained physical parameters do not reflect a performance degradation of optical links over time.

The document US 2009/0010643 A1 is related to component malfunctions in passive optical networks (PON) which can increase bit error rates and decrease a signal-to-noise ratio in communications signals.

The patent US 7,522,846 B1 provides a method and system that is capable of controlling transmit power to achieve a desired OSNR at a receive endpoint.

In document EP 1 049 272 A2 a signal quality monitoring method which can rapidly identify the location of a failure is disclosed.

### Summary

It is an object of the present invention to provide an improved optical receiver, an improved method of operating an optical receiver, an improved optical network and an improved method of operating such optical network which overcome the abovementioned disadvantages.

According to the present invention, regarding the optical receiver, this object is achieved by said optical receiver being configured to determine at least one parameter characterizing a quality of said optical link other than an input power of the received optical signal, and by said optical receiver being configured to transmit said at least one parameter and/or information derived from said at least one parameter to a further device. This advantageously enables to assess a current state and/or degree of degradation of said optical link at the receiver over time, whereby a more precise assessment of the link state of said optical link over the whole lifetime of the optical network can be made. In addition, of course, also an optical receive power of the signal received at the optical receiver may be considered. According to an embodiment, even a real-time and/or pro-active detection (i.e., detection on demand) of optical link degradation may be made. According to a further embodiment, the so obtained information may e.g. be used for informing a routing process of an optical network the optical receiver is part of.

According to the embodiments, said at least one parameter is at least one of: a parameter characterizing chromatic dispersion, a parameter characterizing a number of bit errors prior to a forward error correction, FEC, stage ("pre-FEC BER") of said optical receiver.

According to a further embodiment, said at least one parameter comprises: a parameter characterizing a signal to noise ratio, SNR.

Thereby, a particularly precise assessment of a state and/or degree of degradation of the optical link is possible. Further, in contrast to the conventional static, simulation-based approach, non-linear effects and impairments (e.g. crosstalk) can be considered since they are included in a received SNR or pre-FEC BER.

According to a further embodiment, said optical receiver is configured to periodically determine said at least one parameter and/or determine a degree of link degradation of said at least one optical link depending on said at least one parameter, whereby impending faults of the optical link may be detected rather early.

According to a further embodiment, said optical receiver is configured to a. transmit said at least one parameter and/or information derived from said at least one parameter to a central control system, and/or to b. transmit said at least one parameter and/or information derived from said at least one parameter to a device the optical signal has been received from, and/or to c. flood said at least one parameter and/or information derived from said at least one parameter to a plurality of devices. By one or more of these mechanisms, the detailed information on the state and/or degree of degradation of one or more optical links as obtained by the optical receiver may be distributed to other entities, e.g. of an optical network.

According to a further embodiment, said optical receiver is configured to derive a cost metric for a routing process within an optical network depending on said at least one parameter. According to a further embodiment it is also possible that the optical receiver influences an existing conventional cost metric, which may e.g. be determined depending on an optical input power of a received signal. For example, a value of the conventionally determined cost metric may e.g. be modified depending on said at least one parameter determined according to the principle of the embodiments, whereby a more precise cost metric (and thus routing, which may be based on said cost metric) can be obtained. At the same time, said modified cost metric may be used by conventional routing processes and the like just in the same way as usual. As an example, a conventionally determined cost metric (i.e. determined only depending on an optical receive power associated with a specific optical signal) may e.g. be modified at the optical receiver according to an embodiment depending on a parameter characterizing a chromatic dispersion, CD, of a received optical signal.

A further solution to the object of the present invention is provided by a method of operating an optical receiver as defined by claim 5. Hence, as more parameters than just optical power are considered according to the embodiments, a particularly precise assessment of the state and/or degree of degradation of one or more optical links is enabled.

According to an embodiment said at least one parameter comprises: a parameter characterizing a signal to noise ratio, SNR.

According to a further embodiment said optical receiver periodically determines said at least one parameter and/or a degree of link degradation of said at least one optical link depending on said at least one parameter, whereby a real-time or at least near-real time determination of link quality is possible.

According to a further embodiment said optical receiver a. transmits said at least one parameter and/or information derived from said at least one parameter to a central control system, and/or b. transmits said at least one parameter and/or information derived from said at least one parameter to a device the optical signal has been received from, and/or c. floods said at least one parameter and/or information derived from said at least one parameter to a plurality of devices.

A further solution to the object of the present invention is provided by an optical network according to claim 9.

According to an embodiment, said network element is configured to perform a routing process for said optical network depending on said received parameter or parameters characterizing said quality of said at least one optical link of said optical network. This enables to increase routing efficiency in the whole optical network based on the information on individual optical links collected according to the principle of the embodiments.

According to a further embodiment, said network element is configured to derive a cost metric for a routing process depending on said received at least one parameter.

According to a further embodiment, said network element is configured to, preferably periodically and/or dynamically, determine a degree of link degradation of at least one optical link of said optical network depending on said received at least one parameter.

A further solution to the object of the present invention is provided by a method of operating an optical network according to claim 13.

According to an embodiment, said network element performs a routing process for said optical network depending on said received parameter or parameters characterizing said quality of said at least one optical link of said optical network.

According to a further embodiment, said network element derives a cost metric for a routing process depending on said received at least one parameter, whereby a more efficient routing may be performed taking into account gradual degradations of one or more optical links.

### Brief description of the figures

Further features, aspects and advantages of the present invention are given in the following detailed description with reference to the drawings in which:
- Figure 1: schematically depicts an optical receiver according to an embodiment,
- Figure 2a: schematically depicts a simplified flow-chart of a method according to an embodiment,
- Figure 2b: schematically depicts a simplified flow-chart of a further method according to an embodiment,
- Figure 3: schematically depicts an optical network with a network element according to an embodiment,
- Figure 4: schematically depicts an optical receiver according to a further embodiment,
- Figure 5: schematically depicts a metric calculation scheme according to an embodiment,
- Figure 6: schematically depicts an error rate versus a signal to noise ratio, SNR, according to an embodiment,
- Figure 7: schematically depicts an optical network according to an embodiment, and
- Fig. 8a, 8b, 8c: schematically depict tables comprising metrics associated with optical links of the optical network as depicted by Figure 7.

### Description of the embodiments

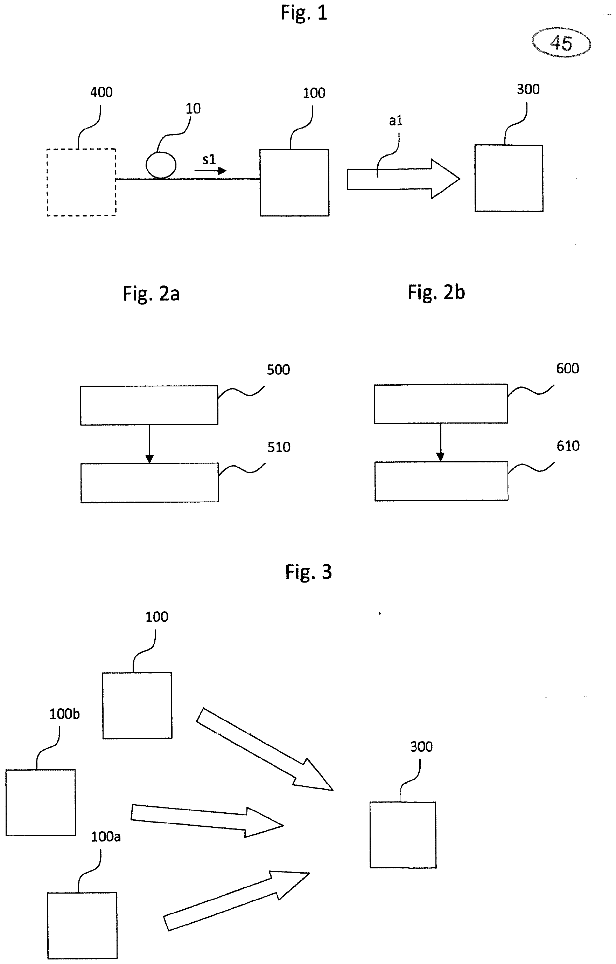

Figure 1 schematically depicts an optical receiver 100 according to an embodiment. At least one optical link 10 is connected to said optical receiver 100, which may receive an optical signal s1 via said optical link 10, i.e. from an optical signal source 400.

Said optical receiver 100 is configured to determine at least one parameter characterizing a quality of said optical link 10 other than an input power of the received optical signal s1. This enables a precise assessment of the optical link and a potential degradation thereof. Particularly, in contrast to conventional systems, wherein at best an input power of a received optical signal is considered for assessing a quality of the optical link, a far more precise evaluation is enabled by the principle according to the embodiments.

In a preferred embodiment, the optical receiver 100 is configured to transmit said at least one parameter and/or information derived from said at least one parameter to a further device 300. This is symbolized by the block arrow a1 of Fig. 1. According to an embodiment, the further device 300 may collect the information a1 from optical receiver 100 and/or further receivers (not shown in Fig. 1) according to the embodiments, for example for monitoring purposes and/or for influencing routing processes depending on the collected information.

Transmission of data a1 to other devices 300 may according to one embodiment be performed by a transmitter unit not depicted. Alternatively, the optical receiver according to the embodiments may also be included in an optical transmitter/receiver ("transceiver"), wherein the transmitter part of said transceiver may be utilized for forwarding data a1 to other devices 300, 400.

Figure 2a schematically depicts a simplified flow-chart of a method according to an embodiment. In step 500, the optical receiver 100 (Fig. 1) determines at least one parameter characterizing a quality of said optical link 10 other than an input power of the received optical signal s1. For example, according to an embodiment, said at least one parameter may comprise: a parameter characterizing chromatic dispersion, CD, and/or a parameter characterizing a signal to noise ratio, SNR, and/or a parameter characterizing a number of bit errors prior to a forward error correction, FEC, stage ("pre-FEC BER") of said optical receiver 100. Thereby, a particularly precise assessment of a state and/or degree of degradation of the optical link is possible. Further, in contrast to the conventional static, simulation-based approach, non-linear effects and impairments (e.g. crosstalk) can be considered since they are included in a received SNR or pre-FEC BER.

In subsequent step 510 (Fig. 2a), the optical receiver 100 transmits said at least one parameter and/or information derived from said at least one parameter to the further device 300 (Fig. 1).

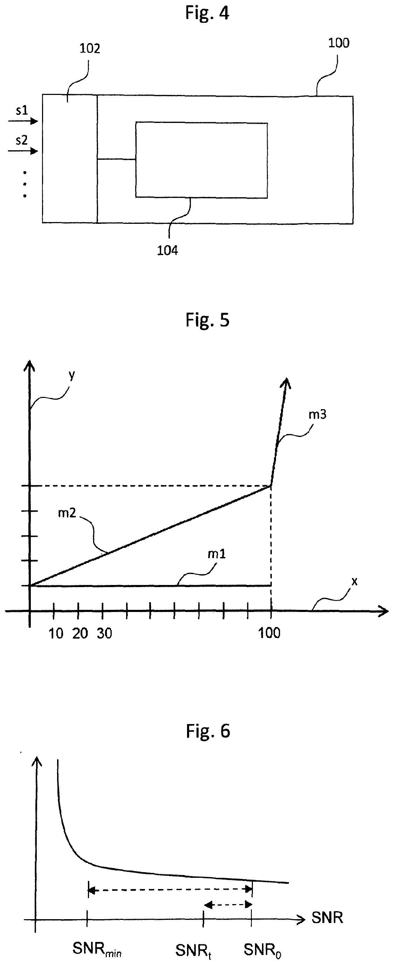

Figure 4 schematically depicts an optical receiver 100 according to a further embodiment. The optical receiver 100 comprises an optical input interface 102 for receiving one or more optical signals s1, s2, ... The input interface 102 may e.g. comprise one or more opto-electric converters or the like which enable a transformation of received optical signals s1, s2 to corresponding electric signals. Generally, the principle according to the embodiments is applicable to any optical link 10 and any optical signal s10 received by the optical receiver 100, independent of multiplexing types (WDM, wavelength division multiplexing, PDM, polarization division multiplexing, and the like), properties of the optical link (monomode/multimode fiber), and so on.

The optical receiver 100 further comprises a control unit 104 which controls an operation of the optical receiver 100. The control unit 104 may e.g. comprise one or more microprocessors and/or digital signal processors and/or field programmable gate arrays (FPGA) or the like, and may preferably be configured to perform the method according to the embodiments. For example, the control unit 104 may estimate one or more parameters characterizing a quality of said optical link 10 (Fig. 1) other than an input power of the received optical signal s1. Of course, additionally, the input power of the received optical signal s1 may also be considered and processed by the control unit 104.

Figure 3 schematically depicts an optical network with several receivers 100, 100a, 100b and a network element 300 according to an embodiment. The receivers 100, 100a, 100b may comprise the functionality as explained above with reference to Fig. 1, Fig. 3. Particularly, according to an embodiment, each of said receivers 100, 100a, 100b is configured to determine at least one parameter characterizing a quality of an optical link 10 associated with said receiver 100, 100a, 100b other than an input power of a received optical signal received via said associated optical link 10. Further, at least one of the receivers, preferably all receivers 100, 100a, 100b, are configured to transmit said at least one parameter and/or information derived from said at least one parameter to said network element 300, which is symbolized by the unreferenced block arrows of Fig. 3.

Thus, the network element 300 may receive and/or store said parameters and/or the information derived therefrom, e.g. for building a data base which comprises information on link quality of the optical links associated with said receivers 100, 100a, 100b.

Figure 2b schematically depicts a simplified flow-chart of a method of operating the network element 300 (Fig. 3) according to an embodiment. In step 600, the network element 300 receives at least one parameter characterizing a quality of at least one optical link 10 (Fig. 1) of an optical network (and/or information derived therefrom, e.g. by the receivers 100, 100a, 100b), particularly from an optical receiver 100, 100a, 100b (Fig. 3) according to the embodiments. In step 610, said network element 300 at least temporarily stores said received parameters (and/or information derived therefrom).

According to an embodiment, said network element 300 is configured to perform a routing process for said optical network depending on said received parameter or parameters characterizing said quality of said at least one optical link of said optical network. This enables to increase routing efficiency in the whole optical network based on the information on individual optical links collected according to the principle of the embodiments.

According to a further embodiment, said network element 300 is configured to derive a cost metric for a routing process depending on said received at least one parameter.

According to a further embodiment, said network element 300 is configured to, preferably periodically and/or dynamically, determine a degree of link degradation of at least one optical link of said optical network depending on said received at least one parameter.

According to a further embodiment, said optical receiver 100 (Fig. 1) is configured to periodically determine said at least one parameter and/or determine a degree of link degradation of said at least one optical link 10 depending on said at least one parameter, whereby impending faults of the optical link 10 may be detected at an early stage.

According to a further embodiment, said optical receiver 100 is configured to transmit said at least one parameter and/or information derived from said at least one parameter to a central control system, which may e.g. comprise or be implemented in the network element 300 of Fig. 3. Alternatively or additionally, said optical receiver 100 may be configured to transmit said at least one parameter and/or information derived from said at least one parameter to a device 400 (Fig. 1) the optical signal s1 has been received from. The information forwarded to device 400 may e.g. be used by said device 400 for future optical signal transmissions to the receiver, e.g. taking into account a current SNR or CD or the like as determined by the receiver 100, whereby even a closed-loop control between devices 300, 400 may be established which aims at improving reliability of optical signal transmission from device 400 to receiver 100.

Alternatively or additionally, said optical receiver 100 may be configured to flood said at least one parameter and/or information derived from said at least one parameter to a plurality of devices 300, 400, 100a, 100b.

According to a further embodiment, said optical receiver 100 (Fig. 1) is configured to derive a cost metric for a routing process within an optical network depending on said at least one parameter. According to a further embodiment it is also possible that the optical receiver 100 influences an existing conventional cost metric, which may e.g. be determined depending on an optical input power of a received signal. For example, a value of the conventionally determined cost metric may e.g. be modified depending on said at least one parameter determined according to the principle of the embodiments, whereby a more precise cost metric (and thus routing, which may be based on said cost metric) can be obtained. At the same time, said modified cost metric may be used by conventional routing processes and the like just in the same way as usual. As an example, a conventionally determined cost metric (i.e. determined only depending on an optical receive power associated with a specific optical signal) may e.g. be modified at the optical receiver according to an embodiment depending on a parameter characterizing a chromatic dispersion, CD, of a received optical signal.

According to a further embodiment, it is particularly beneficial if the optical receiver 100 is implemented in the form of a coherent receiver, because coherent optical receivers are able to collect and extract statistics on the quality of received signals, which may be used according to the embodiments in order to characterize an optical link quality and/or degradation.

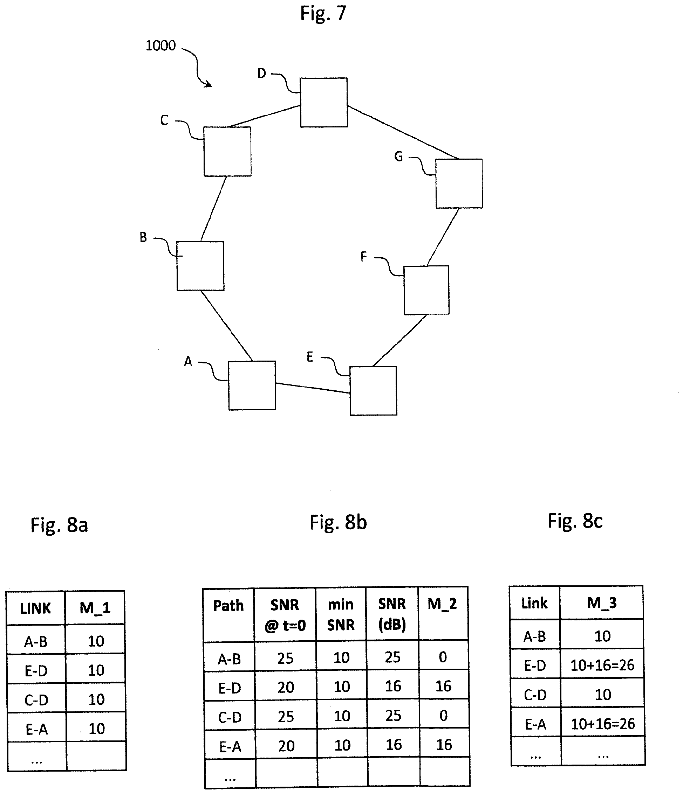

Figure 7 schematically depicts an optical network 1000 according to an embodiment. As an example, each network node A, B, C, D, E, F, G may comprise an optical receiver 100 according to the embodiments. As already explained above, the optical receiver 100 of the nodes A, .., G may also be implemented within an optical transceiver capable of receiving and transmitting optical signals.

According to an embodiment, the term "link segment" may be used to describe a lambda (i.e., wavelength) connection or optical fiber between two neighboring nodes (e.g. A-B, B-C in Fig. 7), while the terms "link" or "path" may be used to describe a connection between a transmitter and a receiver which can span several link segments (e.g. E-D in Fig.2). Optionally, optical amplifiers and/or other optical components may also be comprised in said link segments.

According to a further embodiment, if the parameter(s) determined by the optical receiver 100 according to the embodiments are translated into a cost metric as typically used by routing algorithms to compute a shortest (=cheapest) path in the optical network 1000, routing processes advantageously can become aware of the physical impairments of the optical links A-B, B-C, and the like, and they can react accordingly in a pro-active manner. This would (1) allow sub-lambda services for choosing other paths or (2) give a restoration process time to react before the link actually goes down and to establish a new lambda path. It also allows (3) for a reasonable forecast on forthcoming repair action to be taken.

According to a further embodiment, different degrees of link degradation (derived from the at least one parameter characterizing a quality of said optical link 10 other than an input power of the received optical signal s1, e.g. from SNR and/or pre-FEC BER and/or a digest from several such "impairment parameters") could be distinguished according to pre-defined thresholds and/or percentages of an acceptable maximum value (corresponding to e.g. a minimum SNR or a maximum number of pre-FEC bit errors where an optical link 10 is still working) which increment the metric of the link proportionally.

Fig. 5, 6 exemplarily depict how a metric digest could be calculated according to an embodiment, the metric digest characterizing a degree of degradation of said optical link 10, said metric digest e.g. determined depending on said at least one parameter determined by the optical receiver 100 according to an embodiment.

Specifically, Figure 5 schematically depicts a metric calculation scheme according to an embodiment, and Figure 6 schematically depicts an error rate versus a signal to noise ratio, SNR, according to an embodiment.

At a provisioning time t=0 the optical receiver 100 stores an SNR parameter SNR₀ (Fig. 6), which has been determined upon reception of the optical signal s1 (Fig. 1) . A minimum margin SNRₘᵢₙ needed for decoding at the optical receiver 100 is e.g. known by experience. A typical value for SNRₘᵢₙ for a 100 Gbps (gigabit/second) link is for example about 10dB. The margin between SNR₀ and the minimum SNR SNRₘᵢₙ gives the maximum acceptable degradation. Here it is exemplarily assumed that SNR₀ is 25dB for a short link (e.g. link C-D of the network 1000 depicted by Fig. 7) and 20dB for a longer link (e.g. link E-C of network 1000). If SNRₜ falls below SNRₘᵢₙ rerouting should take place and, hence, the metric for such a lambda path should be significantly higher than the metric of other lambda paths.

According to an embodiment, the metric corresponding to SNRₘᵢₙ should be defined in accordance with the size of a ring or mesh structure in the network topology of network 1000, which is a task to be performed by the individual operator at design time. According to a further embodiment, the metric should be high enough to allow a routing process to choose detour paths. Here, exemplarily a factor of 5 is assumed, i.e. if a specific path normally has a metric MO of 10 it should now have a metric of 50. If an added handicap H_{100%} (value for example 40) is divided into e.g. 10 equal shares each representing a loss of 10% margin, it may be added a metric of 4 for every 10% margin loss. Hence, the metric can be calculated as M = M0 + (SNR₀-SNRₜ)/(SNR₀-SNRₘᵢₙ)^{∗} H_{100%}. Note that M does not need to grow linearly with the margin loss. It may be desirable to have an exponential growth instead.

As already explained above, figure 5 schematically depicts a metric calculation scheme according to an embodiment. The x axis indicates a percentage of maximum acceptable degradation of an optical link 10 considered. The y axis indicates a normalized metric as mentioned above. Reference numeral m1 indicates a metric of a good optical link 10, whereas reference numeral m2 indicates a metric of a degraded optical link. An over-degraded link, which cannot be used any more for reliable signal transmission is indicated by reference numeral m3.

According to a further embodiment, the information a1 (Fig. 1) on a quality of said optical link 10 as determined by the optical receiver 100 according to the embodiments may be distributed in an optical network 1000 (Fig. 7) the optical receiver 100 may form part of. Generally, said network 1000 may have any topology (ring, mesh, tree and the like).

According to an embodiment, the network topology information of the network 1000 is either kept in a centralized system (e.g. management system, PCE (path computation element), SDN (software defined networking) controller or similar) or in every node belonging to a certain area or domain of a hierarchical network structure.

According to a further embodiment, all nodes A, .., G are connected to a control channel (optical supervisory channel, OSC) via which they can exchange control information. Note that for the control plane the terms "link" and "link segment" are synonymous because the control plane is electronically terminated in every node.

According to a further embodiment, impairments could be reported converting SNR and/or pre-FEC BER to an impairment metric for each link or by listing all impairment parameters individually per link (SNR, CD, ..) leaving it to the receiver of the report how to deal with them.

According to a further embodiment, it is assumed that by means of a state-of-the-art control plane distributing topology information or a centralized control or management system, the connection endpoints of a particular lambda path as well as the segments of the path and the carrying fibers are known and can be uniquely identified. Hence, several strategies for dissemination are conceivable.

According to an embodiment, which may also be referred to as "centralized mode", each optical receiver node A, .., G (Fig. 7) may inform a central control system (e.g. management system, a PCE or an SDN controller or similar, this may e.g. be implemented by network element 300 of Fig. 3) about the impairment parameters (for example, a parameter characterizing chromatic dispersion, a parameter characterizing a signal to noise ratio, SNR, a parameter characterizing a number of bit errors prior to a forward error correction, FEC, stage of said optical receiver 100) measured. This can be done via an existing connection to the control system 300 (Fig. 3). The control system 300 maintains the database and updates its metrics accordingly. Eventually, it may download the updated information to the network nodes A, .., G.

According to an embodiment, which may also be referred to as distributed mode (type 1), each optical receiver 100 or network node A, .., G, respectively, informs a sender node of a lambda path about the impairment parameters (for example, a parameter characterizing chromatic dispersion, a parameter characterizing a signal to noise ratio, SNR, a parameter characterizing a number of bit errors prior to a forward error correction, FEC, stage of said optical receiver 100) measured. The senders are e.g. informed by sending single-cast messages to the senders containing all the links between the respective sender and this receiver node A, .., G and their impairment states. According to an embodiment, the sender may update its metrics for the respective downstream link 10 (A-B, B-C, ..). The updated link state database may then be distributed by the sender via a normal control plane flooding mechanism.

According to an embodiment, which may also be referred to as distributed mode (type 2), each optical receiver 100 or network node A, .., G, respectively, floods the impairment parameters for all terminated lambda paths to all neighbors using a standard control plane flooding mechanism e.g. a special type of opaque link state advertisement, LSA, ("impairment LSA", ILSA) which allows to differentiate these links from traffic engineered links (TE links) propagated the same way. ILSAs should be allowed to carry information about more than one link at a time. It is indeed suggested that an ILSA carries information of as many terminated links (=lambda paths) as possible in a single message. Assuming e.g. 10 fiber connections per node A, .., G with 88 wavelengths each (all terminated) and 30 bytes to describe each link would lead to 26.4 kB (kilobyte) of impairment information data plus a few bytes for the ILSA header. It is further assumed a MTU (maximum transmission unit) size per packet of 1500 bytes such that the information can be carried in no more than 18 packets. According to one embodiment, ILSAs may be reported at a relatively large time scale, e.g. less frequently than every hour such that the additional traffic is negligible and they should age out after >= 2-3.times the reporting period. According to a further embodiment, control plane protocols may be based on the senders distributing link state information about their downstream links. Therefore, impairment information from ILSAs needs to be processed in the sender, mapped to a metric value for the respective downstream link, and then be distributed by the sender via normal control plane flooding mechanism. Mapping impairment to an increase/handicap for the metric can be done either in the receiver or in the sender but the sender is responsible for distributing the total metric value.

According to an embodiment, which may also be referred to as distributed mode (type 3), an optical receiver 100 or network node A, .., G, respectively, sends a message to its upstream neighbor on each fiber containing information about all the lambda paths it terminates on this fiber. According to an embodiment, this can be done using a multicast address which is read by each node participating in an OSPF (open shortest path first) or IS-IS (Intermediate System to Intermediate System) routing protocol. The upstream neighbor updates its metric for all paths for which it is the transmitter. This information is then flooded by the routing protocol in the regular intervals in which it would normally be flooded if no impairment statistics were collected. The upstream neighbor then forwards this message to all its upstream neighbors (or to limit messaging only to those upstream neighbors which are involved in lambda paths to the downstream neighbor). This may be done recursively until the message arrives at the last sender having a lambda path to the downstream node. This sender terminates the message. The maximum number of messages generated and transported during a reporting interval is then equivalent to the number of link segments in the network.

According to a further embodiment, the optical receiver 100 may be configured as a coherent receiver which measures an entire path from a transmitter 400 (Fig. 1) to said receiver 100, i.e. at nodes where the signal is generated and terminated in the electrical domain. A coherent receiver may not be aware of intermediate link segments between nodes which transparently pass the optical signal through. Therefore, the information collected in such receivers may not be available for every link segment individually. According to one embodiment, sub-lambda services are enabled to choose alternatives for a degraded lambda path.

According to a further embodiment, an exact localization of a faulty link segment (A-B or B-C of Fig. 7, for example) is also important for operators. If e.g. a fiber or an optical amplifier on a link segment is faulty, the lambda paths should avoid this segment. Therefore, it is desirable to identify the disturbed link segment.

According to one embodiment, this can be achieved by correlating the degradation/failure reports a1 (Fig. 1) from several lambda paths using a particular faulty segment within the same fiber. This is a further application of the principle according to the embodiments. In an exemplary network scenario, there is a traffic relation (relates to a lambda path) between any pair of nodes A, .., G (Fig. 7). For example, an optical fiber link 10 may typically carry 88 different wavelength channels such that there should be enough overlap of lambda paths on individual fibers to identify potential faulty segments.

For example, in Fig. 7, an example situation may be sketched for a single fiber as follows. It is assumed that nodes C and D report a degraded path from node E. Since at the same time, node D reports a good path from node C and node B reports a good path from node A, the faulty segment may be identified as B-C.

Fig. 8a, 8b, 8c schematically depict tables comprising metrics M_1, M_2, M_3 associated with optical links of the optical network as depicted by Figure 7. The table of Fig. 8a represents a conventional link metric table as may be obtained by conventional network planning techniques, e.g. by simulation. For each of the links A-B, E-D, .. a value of 10 for the respective metric M 1 is defined. The table of Fig. 8b represents a link metric table as may be obtained by evaluating the parameters determined by the optical receiver 100 according to the embodiments. Such a table may e.g. be maintained in network element 300, which may also comprise the further tables of Fig. 8a, 8c. The table of Fig. 8c, finally, comprises a combined metric M_3 derived from the metric M_1 of the table of Fig. 8a and from the metric M_2 of the table of Fig. 8b.

Usually, path calculation on the optical layer is typically performed by calculating the shortest path between two network nodes in terms of the number of hops and the geographical distance traversed. Impairments on those paths are covered in a limited manner only by conventional systems. At the transmitter the optical output power of the laser diode may be measured and this value may be used in a feedback loop to control the injected current of the laser diode in pre-defined confines. At the receiver the input power of the photo diode may be measured. Two power-value thresholds may be defined for determining link degradation and link failure. Degradation means that a link is still working but impaired by certain effects, e.g. aging of components (transmitters, fibers, receivers) resulting in less received power. A failure means that a threshold is exceeded where successful decoding of the signal is not feasible any more. In this case an interface controller reports the link as down and a new route through the optical network may be established. With conventional systems, this is solely based on plain optical power values giving a very imprecise indication of a total link degradation and link failure because, even if the optical power value is still above the degradation threshold, it is possible that (1) the electrical signal derived from a received optical signal cannot be decoded any more due to a weak signal-to-noise-ratio, SNR, value or (2) there is already a significant number of symbol errors which can still be corrected by the forward error correction, FEC, and therefore leave the operator or control plane without notification.

In contrast to such conventional systems, the principle according to the embodiments has a plurality of advantages:
More parameters than just optical power can be considered: SNR, Pre-FEC-BER, CD, and the like. Further, non-linear impairments (e.g. crosstalk) can be considered since they have an impact to the received SNR or Pre-FEC BER, which may be determined by the optical receiver 100 according to the embodiments. The additional parameter(s) considered according to the embodiments give a more precise indication of the signal quality and the corresponding optical impairments on a link 10 (Fig. 1). Moreover, real-time measurement is enabled instead of static, analytical rules for pre-calculation. Thus, better forecasts with respect to planned vs. unplanned outages may be made. Still further, a distributed control and management is enabled by the principle according to the embodiments. Additionally, indications of faulty segments of an optical network 1000 may be obtained by correlation of the data a1 provided by the optical receiver(s) 100 ("fault report correlation").

The description and drawings merely illustrate the principles of the invention. It will thus be appreciated that those skilled in the art will be able to devise various arrangements that, although not explicitly described or shown herein, embody the principles of the invention and are included within the scope that is defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Optical receiver (100) configured to receive an optical signal (s1) from at least one optical link (10), wherein said optical receiver (100) is configured to determine (500) at least one parameter characterizing a quality of said optical link (10) other than an input power of the received optical signal (s1), and to transmit (510) said at least one parameter and/or information derived from said at least one parameter to a further device (300), wherein said at least one parameter is a parameter (P3) characterizing a number of bit errors prior to a forward error correction, FEC, stage of said optical receiver (100), wherein said optical receiver (100) comprises a control unit (104), and wherein said control unit (104) is configured to determine (500) said at least one parameter.

2. Optical receiver (100) according to claim 1, wherein said at least one parameter further comprises:
- a parameter (P1) characterizing chromatic dispersion,
- a parameter (P2) characterizing a signal to noise ratio, SNR.

3. Optical receiver (100) according to one of the preceding claims, wherein said optical receiver (100) is configured to periodically determine (500) said at least one parameter (P1, P2, P3) and/or determine a degree of link degradation of said at least one optical link (10) depending on said at least one parameter (P1, P2, P3).

4. Optical receiver (100) according to one of the preceding claims, wherein said optical receiver (100) is configured to
a. transmit said at least one parameter and/or information derived from said at least one parameter to a central control system, and/or to
b. transmit said at least one parameter and/or information derived from said at least one parameter to a device (400) the optical signal (s1) has been received from, and/or to
c. flood said at least one parameter and/or information derived from said at least one parameter to a plurality of devices.

5. Method of operating an optical receiver (100) configured to receive an optical signal (s1) from at least one optical link (10), wherein said optical receiver (100) determines (500) at least one parameter characterizing a quality of said optical link (10) other than an input power of the received optical signal (s1), and transmits (510) said at least one parameter and/or information derived from said at least one parameter to a further device (300), wherein said at least one parameter is
a parameter (P3) characterizing a number of bit errors prior to a forward error correction, FEC, stage of said optical receiver (100), wherein said optical receiver (100) comprises a control unit (104), and wherein said control unit (104) determines (500) said at least one parameter.

6. Method according to claim 5, wherein said at least one parameter further comprises:
- a parameter (P1) characterizing chromatic dispersion,
- a parameter (P2) characterizing a signal to noise ratio, SNR.

7. Method according to one of the claims 5 to 6, wherein said optical receiver (100) periodically determines (500) said at least one parameter (P1, P2, P3) and/or a degree of link degradation of said at least one optical link (10) depending on said at least one parameter (P1, P2, P3) .

8. Method according to one of the claims 5 to 7, wherein said optical receiver (100)
a. transmits said at least one parameter and/or information derived from said at least one parameter to a central control system, and/or to
b. transmits said at least one parameter and/or information derived from said at least one parameter to a device (400) the optical signal (s1) has been received from, and/or to
c. floods said at least one parameter and/or information derived from said at least one parameter to a plurality of devices.

9. Optical network (1000) comprising a network element (300) and at least one optical receiver (100; 100a, 100b, 100c) according to one of the claims 1 to 4, wherein said network element (300) is configured to receive at least one parameter characterizing a quality of at least one optical link (10) of said optical network (1000) from said at least one optical receiver (100; 100a, 100b, 100c), and to at least temporarily store said at least one parameter, wherein said at least one parameter is a parameter (P3) characterizing a number of bit errors prior to a forward error correction, FEC, stage of said optical receiver (100; 100a, 100b, 100c).

10. Optical network (1000) according to claim 9, wherein said network element (300) is configured to perform a routing process for said optical network (1000) depending on said received parameter or parameters characterizing said quality of said at least one optical link (10) of said optical network (1000).

11. Optical network (1000) according to one of the claims 9 to 10, wherein said network element (300) is configured to derive a cost metric for a routing process depending on said received at least one parameter.

12. Optical network (1000) according to one of the claims 9 to 10, wherein said network element (300) is configured to, preferably periodically and/or dynamically, determine a degree of link degradation of at least one optical link (10) of said optical network (1000) depending on said received at least one parameter.

13. Method of operating an optical network (1000) comprising a network element (300) and at least one optical receiver (100; 100a, 100b, 100c) according to one of the claims 1 to 4, wherein said network element (300) receives (600) at least one parameter characterizing a quality of at least one optical link (10) of said optical network (1000) from said at least one optical receiver (100; 100a, 100b, 100c), and wherein said network element (300) at least temporarily stores (610) said at least one parameter, wherein said at least one parameter is a parameter (P3) characterizing a number of bit errors prior to a forward error correction, FEC, stage of said optical receiver (100; 100a, 100b, 100c).

14. Method according to claim 13, wherein said network element performs a routing process for said optical network (1000) depending on said received parameter or parameters characterizing said quality of said at least one optical link (10) of said optical network (1000).

15. Method according to one of the claims 13 to 14, wherein said network element (300) derives a cost metric for a routing process depending on said received at least one parameter.

## Patentansprüche

1. Optischer Empfänger (100), der ausgelegt ist zum Empfangen eines optischen Signals (s1) von mindestens einer optischen Verbindung (10), wobei der optische Empfänger (100) ausgelegt ist zum Bestimmen (500) von mindestens einem Parameter, der eine Qualität der optischen Verbindung (10) außer einer Eingangsleistung des empfangenen optischen Signals (s1) charakterisiert, und zum Übertragen (510) des mindestens einen Parameters und/oder von Informationen, die aus dem mindestens einen Parameter hergeleitet werden, zu einer weiteren Einrichtung (300), wobei der mindestens eine Parameter ein Parameter (P3) ist, der eine Anzahl von Bitfehlern vor einer Vorwärtsfehlerkorrektur- bzw. FEC-Stufe des optischen Empfängers (100) charakterisiert, wobei der optische Empfänger (100) eine Steuereinheit (104) umfasst und wobei die Steuereinheit (104) ausgelegt ist zum Bestimmen (500) des mindestens einen Parameters.

2. Optischer Empfänger (100) nach Anspruch 1, wobei der mindestens eine Parameter ferner Folgendes umfasst:
- einen Parameter (P1), der die chromatische Dispersion charakterisiert,
- einen Parameter (P2), der ein Signal-RauschVerhältnis bzw. SNR charakterisiert.

3. Optischer Empfänger (100) nach einem der vorangegangenen Ansprüche, wobei der optische Empfänger (100) ausgelegt ist zum periodischen Bestimmen (500) des mindestens einen Parameters (P1, P2, P3) und/oder zum Bestimmen eines Grads der Verbindungsverschlechterung der mindestens einen optischen Verbindung (10) in Abhängigkeit von dem mindestens einen Parameter (P1, P2, P3).

4. Optischer Empfänger (100) nach einem der vorangegangenen Ansprüche, wobei der optische Empfänger (100) ausgelegt ist zum:
a. Übertragen des mindestens einen Parameters und/oder von Informationen, die aus dem mindestens einen Parameter hergeleitet werden, zu einem zentralen Steuersystem, und/oder zum
b. Übertragen des mindestens einen Parameters und/oder von Informationen, die aus dem mindestens einen Parameter hergeleitet werden, zu einer Einrichtung (400), von der das optische Signal (s1) empfangen wurde, und/oder zum
c. Fluten des mindestens einen Parameters und/oder der Informationen, die aus dem mindestens einen Parameter hergeleitet werden, zu mehreren Einrichtungen.

5. Verfahren zum Betreiben eines optischen Empfängers (100), der ausgelegt ist zum Empfangen eines optischen Signals (s1) von mindestens einer optischen Verbindung (10), wobei der optische Empfänger (100) mindestens einen Parameter bestimmt (500), der eine Qualität der optischen Verbindung (10) außer einer Eingangsleistung des empfangenen optischen Signals (s1) charakterisiert, und den mindestens einen Parameter und/oder Informationen, die aus dem mindestens einen Parameter hergeleitet werden, zu einer weiteren Einrichtung (300) überträgt (510), wobei der mindestens eine Parameter ein Parameter (P3) ist, der eine Anzahl von Bitfehlern vor einer Vorwärtsfehlerkorrektur- bzw. FEC-Stufe des optischen Empfängers (100) charakterisiert, wobei der optische Empfänger (100) eine Steuereinheit (104) umfasst und wobei die Steuereinheit (104) den mindestens einen Parameter bestimmt (500).

6. Verfahren nach Anspruch 5, wobei der mindestens eine Parameter ferner Folgendes umfasst:
- einen Parameter (P1), der die chromatische Dispersion charakterisiert,
- einen Parameter (P2), der ein Signal-RauschVerhältnis bzw. SNR charakterisiert.

7. Verfahren nach einem der Ansprüche 5 bis 6, wobei der optische Empfänger (100) den mindestens einen Parameter (P1, P2, P3) und/oder einen Grad der Verbindungsverschlechterung der mindestens einen optischen Verbindung (10) in Abhängigkeit von dem mindestens einen Parameter (P1, P2, P3) periodisch bestimmt (500) .

8. Verfahren nach einem der Ansprüche 5 bis 7, wobei der optische Empfänger (100)
a. den mindestens einen Parameter und/oder Informationen, die aus dem mindestens einen Parameter hergeleitet werden, zu einem zentralen Steuersystem überträgt, und/oder
b. den mindestens einen Parameter und/oder Informationen, die aus dem mindestens einen Parameter hergeleitet werden, zu einer Einrichtung (400), von der das optische Signal (s1) empfangen wurde, überträgt und/oder
c. den mindestens einen Parameter und/oder die Informationen, die aus dem mindestens einen Parameter hergeleitet werden, zu mehreren Einrichtungen flutet.

9. Optisches Netzwerk (1000), das ein Netzwerkelement (300) und mindestens einen optischen Empfänger (100; 100a, 100b, 100c) nach einem der Ansprüche 1 bis 4 umfasst, wobei das Netzwerkelement (300) ausgelegt ist zum Empfangen von mindestens einem Parameter, der eine Qualität von mindestens einer optischen Verbindung (10) des optischen Netzwerks (1000) charakterisiert, von dem mindestens einen optischen Empfänger (100; 100a, 100b, 100c), und zum zumindest temporären Speichern des mindestens einen Parameters, wobei der mindestens eine Parameter ein Parameter (P3) ist, der eine Anzahl von Bitfehlern vor einer Vorwärtsfehlerkorrektur- bzw. FEC-Stufe des optischen Empfängers (100; 100a, 100b, 100c) charakterisiert.

10. Optisches Netzwerk (1000) nach Anspruch 9, wobei das Netzwerkelement (300) ausgelegt ist zum Durchführen eines Routing-Prozesses für das optische Netzwerk (1000) in Abhängigkeit von dem empfangenen Parameter oder von Parametern, die die Qualität der mindestens einen optischen Verbindung (10) des optischen Netzwerks (1000) charakterisieren.

11. Optisches Netzwerk (1000) nach einem der Ansprüche 9 bis 10, wobei das Netzwerkelement (300) ausgelegt ist zum Herleiten einer Kostenmetrik für einen Routing-Prozess in Abhängigkeit von dem empfangenen mindestens einen Parameter.

12. Optisches Netzwerk (1000) nach einem der Ansprüche 9 bis 10, wobei das Netzwerkelement (300) ausgelegt ist zum vorzugsweise periodischen und/oder dynamischen Bestimmen eines Grads der Verbindungsverschlechterung von mindestens einer optischen Verbindung (10) des optischen Netzwerks (1000) in Abhängigkeit von dem empfangenen mindestens einen Parameter.

13. Verfahren zum Betreiben eines optischen Netzwerks (1000), das ein Netzwerkelement (300) und mindestens einen optischen Empfänger (100; 100a, 100b, 100c) nach einem der Ansprüche 1 bis 4 umfasst, wobei das Netzwerkelement (300) mindestens einen Parameter, der eine Qualität von mindestens einer optischen Verbindung (10) des optischen Netzwerks (1000) charakterisiert, von dem mindestens einen optischen Empfänger (100; 100a, 100b, 100c) empfängt (600), und wobei das Netzwerkelement (300) zumindest temporär den mindestens einen Parameter speichert (610), wobei der mindestens eine Parameter ein Parameter (P3) ist, der eine Anzahl von Bitfehlern vor einer Vorwärtsfehlerkorrektur- bzw. FEC-Stufe des optischen Empfängers (100; 100a, 100b, 100c) charakterisiert.

14. Verfahren nach Anspruch 13, wobei das Netzwerkelement einen Routing-Prozess für das optische Netzwerk (1000) in Abhängigkeit von dem empfangenen Parameter oder von Parametern, die die Qualität der mindestens einen optischen Verbindung (10) des optischen Netzwerks (1000) charakterisieren, durchführt.

15. Verfahren nach einem der Ansprüche 13 bis 14, wobei das Netzwerkelement (300) eine Kostenmetrik für einen Routing-Prozess in Abhängigkeit von dem empfangenen mindestens einen Parameter herleitet.

## Revendications

1. Récepteur optique (100) configuré pour recevoir un signal optique (s1) provenant d'au moins une liaison optique (10), ledit récepteur optique (100) étant configuré pour déterminer (500) au moins un paramètre caractérisant une qualité de ladite liaison optique (10) autre qu'une puissance d'entrée du signal optique reçu (s1), et pour transmettre (510) ledit au moins un paramètre et/ou des informations dérivées dudit au moins un paramètre à un autre dispositif (300), ledit au moins un paramètre étant un paramètre (P3) caractérisant un certain nombre d'erreurs binaires avant un étage de correction d'erreur sans voie de retour, FEC, dudit récepteur optique (100), ledit récepteur optique (100) comprenant une unité de commande (104), et ladite unité de commande (104) étant configurée pour déterminer (500) ledit au moins un paramètre.

2. Récepteur optique (100) selon la revendication 1, ledit au moins un paramètre comprenant en outre :
- un paramètre (P1) caractérisant la dispersion chromatique,
- un paramètre (P2) caractérisant un rapport signal sur bruit, SNR.

3. Récepteur optique (100) selon l'une des revendications précédentes, ledit récepteur optique (100) étant configuré pour déterminer périodiquement (500) ledit au moins un paramètre (P1, P2, P3) et/ou déterminer un degré de dégradation de liaison de ladite au moins une liaison optique (10) en fonction dudit au moins un paramètre (P1, P2, P3).

4. Récepteur optique (100) selon l'une des revendications précédentes, ledit récepteur optique (100) étant configuré pour
a. transmettre ledit au moins un paramètre et/ou des informations dérivées dudit au moins un paramètre à un système de commande central, et/ou
b. transmettre ledit au moins un paramètre et/ou des informations dérivées dudit au moins un paramètre à un dispositif (400) dont le signal optique (s1) a été reçu, et/ou
c. inonder, avec ledit au moins un paramètre et/ou des informations dérivées dudit au moins un paramètre, une pluralité de dispositifs.

5. Procédé de fonctionnement d'un récepteur optique (100) configuré pour recevoir un signal optique (s1) provenant d'au moins une liaison optique (10), ledit récepteur optique (100) déterminant (500) au moins un paramètre caractérisant une qualité de ladite liaison optique (10) autre qu'une puissance d'entrée du signal optique reçu (s1), et transmettant (510) ledit au moins un paramètre et/ou des informations dérivées dudit au moins un paramètre à un dispositif supplémentaire (300), ledit au moins un paramètre étant
un paramètre (P3) caractérisant un certain nombre d'erreurs binaires avant un étage de correction d'erreur sans voie de retour, FEC, dudit récepteur optique (100), ledit récepteur optique (100) comprenant une unité de commande (104), et ladite unité de commande (104) déterminant (500) ledit au moins un paramètre.

6. Procédé selon la revendication 5, ledit au moins un paramètre comprenant en outre :
- un paramètre (P1) caractérisant la dispersion chromatique,
- un paramètre (P2) caractérisant un rapport signal sur bruit, SNR.

7. Procédé selon l'une des revendications 5 à 6, ledit récepteur optique (100) déterminant périodiquement (500) ledit au moins un paramètre (P1, P2, P3) et/ou un degré de dégradation de liaison de ladite au moins une liaison optique (10) en fonction dudit au moins un paramètre (P1, P2, P3) .

8. Procédé selon l'une des revendications 5 à 7, ledit récepteur optique (100)
a. transmettant ledit au moins un paramètre et/ou des informations dérivées dudit au moins un paramètre à un système de commande central, et/ou
b. transmettant ledit au moins un paramètre et/ou des informations dérivées dudit au moins un paramètre à un dispositif (400) dont le signal optique (s1) a été reçu, et/ou
c. inondant, avec ledit au moins un paramètre et/ou des informations dérivées dudit au moins un paramètre, une pluralité de dispositifs.

9. Réseau optique (1000) comprenant un élément de réseau (300) et au moins un récepteur optique (100 ; 100a, 100b, 100c) selon l'une des revendications 1 à 4, ledit élément de réseau (300) étant configuré pour recevoir au moins un paramètre caractérisant une qualité d'au moins une liaison optique (10) dudit réseau optique (1000) provenant dudit au moins un récepteur optique (100 ; 100a, 100b, 100c), et pour mémoriser au moins temporairement ledit au moins un paramètre, ledit au moins un paramètre étant un paramètre (P3) caractérisant un certain nombre d'erreurs binaires avant un étage de correction d'erreur sans voie de retour, FEC, dudit récepteur optique (100 ; 100a, 100b, 100c).

10. Réseau optique (1000) selon la revendication 9, ledit élément de réseau (300) étant configuré pour effectuer un processus de routage pour ledit réseau optique (1000) en fonction dudit ou desdits paramètres reçus caractérisant ladite qualité de ladite au moins une liaison optique (10) dudit réseau optique (1000).

11. Réseau optique (1000) selon l'une des revendications 9 à 10, ledit élément de réseau (300) étant configuré pour dériver une mesure de coût pour un processus de routage en fonction dudit au moins un paramètre reçu.

12. Réseau optique (1000) selon l'une des revendications 9 à 10, ledit élément de réseau (300) étant configuré pour déterminer, de préférence périodiquement et/ou dynamiquement, un degré de dégradation de liaison d'au moins une liaison optique (10) dudit réseau optique (1000) en fonction dudit au moins un paramètre reçu.

13. Procédé de fonctionnement d'un réseau optique (1000) comprenant un élément de réseau (300) et au moins un récepteur optique (100 ; 100a, 100b, 100c) selon l'une des revendications 1 à 4, ledit élément de réseau (300) recevant (600) au moins un paramètre caractérisant une qualité d'au moins une liaison optique (10) dudit réseau optique (1000) provenant dudit au moins un récepteur optique (100 ; 100a, 100b, 100c), et ledit élément de réseau (300) stockant au moins temporairement (610) ledit au moins un paramètre, ledit au moins un paramètre étant un paramètre (P3) caractérisant un certain nombre d'erreurs binaires avant un étage de correction d'erreur sans voie de retour, FEC, dudit récepteur optique (100 ; 100a, 100b, 100c).

14. Procédé selon la revendication 13, ledit élément de réseau effectuant un processus de routage pour ledit réseau optique (1000) en fonction dudit ou desdits paramètres reçus caractérisant ladite qualité de ladite au moins une liaison optique (10) dudit réseau optique (1000).

15. Procédé selon l'une des revendications 13 à 14, ledit élément de réseau (300) dérivant une mesure de coût pour un processus de routage en fonction dudit au moins un paramètre reçu.
